**Europäisches Patentamt**

(19) **European Patent Office**

**Office européen des brevets**

(11) Publication number: **0 021 659**

**A1**

(12) # EUROPEAN PATENT APPLICATION

(21) Application number: **80301875.3**

(22) Date of filing: **05.06.80**

(51) Int. Cl.³: **G 06 F 15/46**
**H 03 K 21/36**

(30) Priority: **07.06.79 GB 7919924**

(43) Date of publication of application:
**07.01.81 Bulletin 81/1**

(84) Designated Contracting States:
**DE FR IT SE**

(71) Applicant: **THE RANK ORGANISATION LIMITED**
**11 Hill Street**
**London W1X 8AE(GB)**

(72) Inventor: **Klimek, Norbert Max**
**27 Wilton Road**
**Cockfosters, Hertfordshire(GB)**

(74) Representative: **Cullis, Roger et al,**
**c/o H.G. Amann Patents Manager The Rank**
**Organisation Limited 439 Godstone Road**
**Whyteleafe, Surrey, CR3 OYG(GB)**

(54) Electronic counting and control apparatus.

(57) Electronic counting and control apparatus for performing a variety of tasks in industrial applications comprises a mask programmable microprocessor (11) with associated hardware and programmed with a programme for performing all tasks by software. The microprocessor (11) has a random access memory organised by the software into a plurality of memory registers (12 to 17) which can function as counters or as memories. A keyboard (35) is provided for entering data signals into selected ones of the registers (12 to 17), and a display device (40) is linked in to the apparatus for displaying the memory register contents. An input multiplexer (25) receives at one set of inputs ($B_1$ to $B_4$) control signals on the basis of which appropriate system levels are selected to control the memory registers (12 to 15) to function in one of a plurality of predetermined modes of operation. At a second set of inputs ($A_1$ to $A_4$), the multiplexer (25) receives count inputs.

./...

FIG.1

## Electronic Counting and Control Apparatus

The present invention relates to electronic counting and control apparatus. In particular, the present invention relates to apparatus for counting input pulses occurring regularly or irregularly on one or more inputs and for producing output signals in response thereto in a predetermined manner, said apparatus comprising a keyboard having a plurality of data keys, a microprocessor having a random access memory at least a part of which is organised as a plurality of independent memory registers for counting said input pulses and memorising predetermined reference count values selected by operation of said data keys, and a display device for displaying the contents of said memory registers.

Industrial applications for electronic counting and control apparatus are many and various, and the different types of apparatus needed to meet all the varying particular requirements are also many. Thus one type of apparatus may be designed to count successive events to perform a batching control while another type may effect a timing control function.

A typical state of the art counter is the series 7920 predetermining counter manufactured by the Digital Systems Division of Veeder-Root, Hartford, Connecticut; U.S.A. This predetermining counter, which is microprocessor based, enables fifty rows of preset information to be entered through a keyboard and provides for batch totalising as well as the generation of pre-warns. Although sophisticated, the counter lacks versatility in being limited to simple counting and batching functions.

It is an object of the present invention to provide electronic counting and control apparatus which can be readily adapted for use in a wide range of situations where numerical control of industrial operations is required.

Accordingly, the present invention provides electronic counting and control apparatus of the initially referred to form including a microprocessor with a plurality of independent memory registers, in which the apparatus is selectively settable to operate in any one of a plurality of different modes in each of which the apparatus is arranged to effect a different counting and control function for which purpose the said memory registers are appropriately organised to operate as counters or as memories, in each said mode at least one said memory register being arranged to receive and count input pulses and one or more said memory registers being arranged to store reference count values upon the counting of which the microprocessor is set to produce a flag signal to the display device and/or to an output of the apparatus, selection of the desired operating mode being effected by mode-selection means of the apparatus.

The apparatus of the invention enables the immediate selection of the mode of operation most suitable for the task in hand.

Inputs to the apparatus, of which there may be several, may be made by means of transducers, switches and/or sensors, and/or by means of the manually controlled keyboard. In addition to counting functions, timing functions can be performed under the control of an external source of clock pulses, or alternatively an internal source of clock pulses may be provided within the apparatus.

The microprocessor is preferably a mask programmable calculator oriented microprocessor which can readily be programmed with the software required to execute the tasks required of it.

Preferably a part of the random access memory of the microprocessor is organised by the software as six memory registers while the microprocessor functionally provides status-determining means for detecting the contents of the memory registers and for providing respective flag signals to the display device and/or to one or more control output of the apparatus when the contents of one of the memory registers reaches a selected value which may be stored in one of the other registers or may be determined by an initial loading of the said one memory register. The memory registers, when arranged for counting, may operate to increment or decrement in response to input signals in dependence on selectable controls, for controlling them to count up or count down.

The electronic counting and control apparatus of the invention may be provided with one or a plurality of inputs for the connection of one or a plurality of input lines leading from transducers, switches or other sensors by means of which electrical signals representing the events to be counted are generated. For example, an embodiment of the invention may be adapted for counting and controlling packaging by maintaining a check on the number of items conveyed past a sensor for insertion into a box and also, from the same input, the number of boxes filled so that a required number of boxes can be packed into a carton. For such a process the apparatus of the invention can be set to operate in a mode in which the said one memory register is arranged to receive and count input pulse signals representing events to be counted, a second memory register is arranged to store a value selected by operation of the data input keys of the keyboard, and the said status-determining means is operable to detect equality between the contents of the said one register and those of the said second register, the flag signal generated when such equality is detected being further supplied to a third memory register. The third memory register thus counts boxes filled without requiring a separate sensor for detecting filled boxes conveyed from a filling station. A number representing a required number of boxes to be packed into a carton can be stored in a fourth memory register by means of the keyboard, which in addition to data keys has a plurality of keys for identifying a memory register and allowing the contents to be changed by substitution (or of course by clearing), there being second status-determining means for detecting equality between the contents of the said third and fourth memory registers and for generating a flag signal when such equality is detected. This example, of course, is only one of many suitable applications for the electronic counting and control apparatus of the present invention which, in addition to the foregoing mode of operation, has a plurality of other modes of operation which will be discussed in more detail below with reference to the specific embodiment of the invention illustrated in the accompanying drawings, in which;

Figure 1 is a block schematic diagram illustrating the general arrangement of a part of the apparatus of the invention;

Figure 2 is a schematic diagram illustrating the organisation of a part of the RAM of the microprocessor when the apparatus is set to operate in a first mode;

Figure 3 is a schematic diagram illustrating the organisation of a part of the RAM of the microprocessor when the apparatus is set to operate in a second mode;

Figure 4 is a schematic diagram illustrating the organisation of a part of the RAM of the microprocessor when the apparatus is set to operate in a third mode;

Figure 5 is a schematic diagram illustrating the organisation of a part of the RAM of the microprocessor when the apparatus is set to operate in a fourth mode;

Figure 6 is a schematic diagram illustrating the organisation of a part of the RAM of the microprocessor when the apparatus is set to operate in a fifth mode;

Figure 7 is a schematic diagram illustrating the organisation of a part of the RAM of the microprocessor when the apparatus is to operate in a sixth mode.

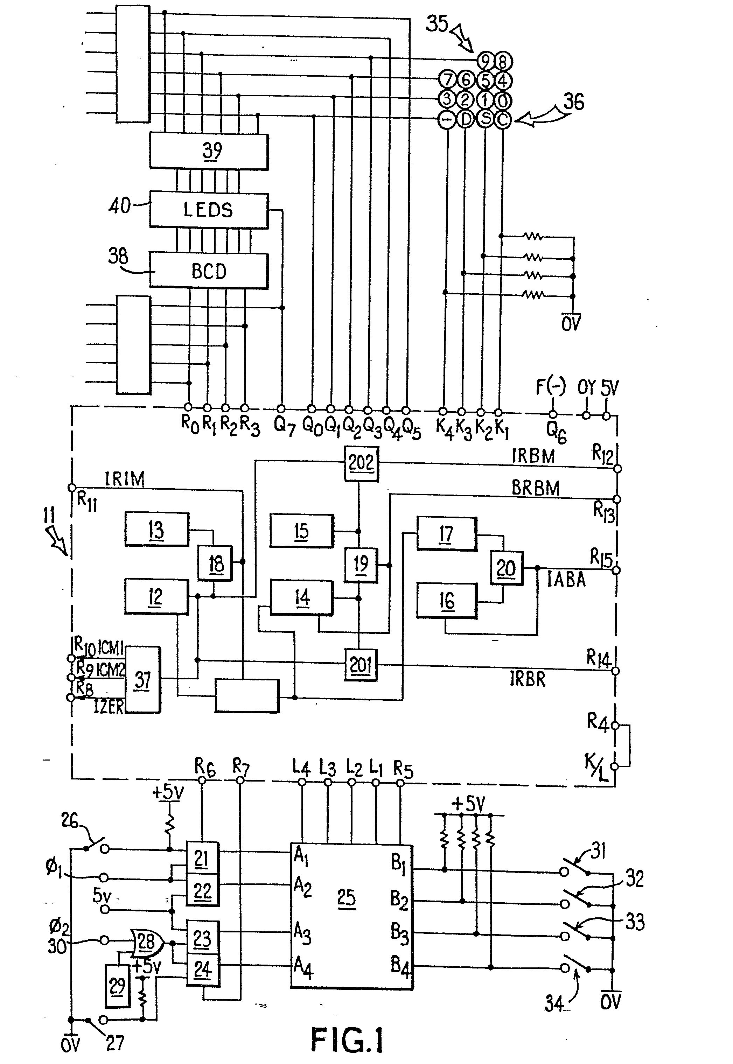

The electronic counting and controlling apparatus shown in Figure 1 is based on a TMS 1200C microprocessor and executes all tasks by software. In the embodiment illustrated the design is based on CMOS technology which has advantages over most currently available logic systems of very high noise immunity and extremely low power consumption. The microprocessor is indicated in Figure 1 by the broken outline identified by the reference numeral 11. Within the broken outline 11 there are shown various component parts of the microprocessor useful in explaining the operation of the apparatus. Around the broken outline 11 are shown a plurality of terminals which would be provided in practice by terminal pins of the microprocessor package. The random access memory of the microprocessor 11 is organised as six memory registers 12, 13, 14, 15, 16 and 17 which are linked in pairs by status-determining circuits 18, 19, 20, 201 and 202. The memory register 12 corresponds to the said one register referred to above which, in all modes of operation of the apparatus is arranged to receive input signals, identified as $\emptyset_1$ signals, representing events to be counted by the apparatus.

The $\emptyset_1$ signals are applied to two of four D type flip flops 21, 22, 23, 24 the outputs of which are fed as an input status word to one side, identified as the A side, of an input multiplexer 25. The D-type flip flops are arranged in pairs 21 and 22 forming one pair whilst 23 and 24 form the other pair. One flip flop of each pair, that is flip flops 21 and 24 receive an input signal via a control line or switch, respectively 26 and 27, which form part of external control arrangements of the apparatus. The flips 23 and 24 receive an input signal $\emptyset_2$ from an OR gate 28 which is a clock pulse train either generated by an oscillator 29 of the apparatus or generated externally of the apparatus and applied to a terminal 30 which constitutes one input to the OR gate 28. The input arrangement via D-type flip flops is ideally suited for correct signal recognition since it allows for both $\emptyset_1$ and $\emptyset_2$ signals to arrive simultaneously or indeed with any phase relationship. Software interrogates the condition of the four flip flops via the multiplexer on a polling basis and terminates each successful registration of a $\emptyset_1$ or a $\emptyset_2$ input signal with the associated clear derived via outputs $R_6$ or $R_7$ of the microprocessor 11. Thus the input circuit is edge sensitive and pulse width or frequency relationships do not matter.

To the other side of the input multiplexer 25, identified as the B side thereof, are applied four further inputs constituting a second input status word generated by selective depression of one or more of a set of four keys or lines 31 - 34. The modes of operation selected by the keys or lines 31 - 34 will be discussed in greater detail below. The status word applied by the keys or lines 31 - 34 to the input multiplexer is used in the microprocessor 11 for the selection of a particular system level and thus instructs software to allocate different functions to the registers 12 - 17 so that some perform counting functions whilst others become memories for storing fixed numeric data which can be entered into them by means of a plurality of data keys, generally indicated 35 which also form part of the apparatus keyboard. The apparatus illustrated operates with six system levels.

In addition to the numeric keys 35 the keyboard includes a plurality of function keys 36 for accessing the registers, these include a "store" key S for controlling an identified register to store a number set on the numeric keys 35 of the keyboard a "clear" key C for clearing the contents of an identified register, and a "display" key for causing the contents of an identified register to be displayed on a display device 40 in the form of a four or six digit multiplexed seven segment light emitting diode array which is driven from one BCD-to-seven segment decoder 38 and four or six digit enable lines. The BCD signals to the decoder 38 appear on outputs $R_0$ - $R_3$ of the microprocessor 11, with the multiplexed decimal point (when required) appearing on $Q_7$. The multiplex sequence is from LSD to MSD and each digit is held on for approximately 10 ms, digit enable lines feed into buffers 39 for the display and appear on outputs $Q_0$ to $Q_5$ of the microprocessor. The entire display area is covered with a red filter in order to obtain good display visibility in direct light conditions. When the outputs to the display represent time rather than a number the device automatically inserts decimal points to separate hours, minutes and seconds.

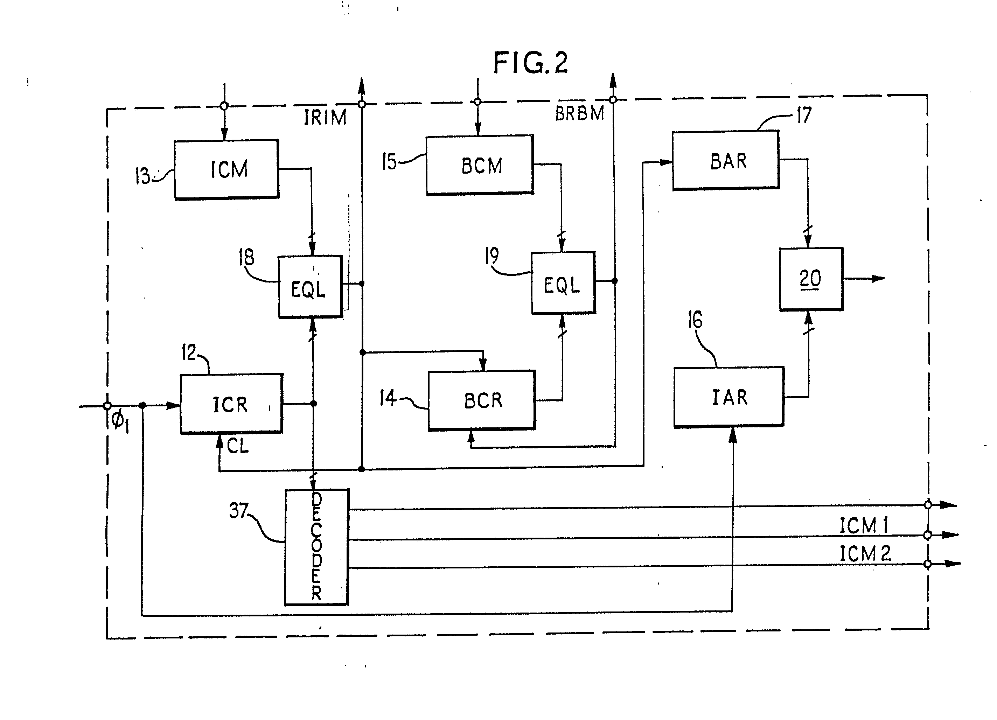

The organisation of the RAM space of the microprocessor 11 when set to operate in a first or "count-up and batching" mode is illustrated in Figure 2 which will be described also making reference to Figure 1. All six registers 12 - 17 are employed in this mode, but only the input $\emptyset_1$ which is counted in the "up" direction by the register 12 which is identified as the Input Count Register (ICR). Initially the register 12 is set to zero and counts the number of $\emptyset_1$ pulses arriving representing the events which have occurred. The second register 13 is arranged to store a number, fed into it from the keyboard upon operation of the Key S and suitable identification of the register. This register is termed the Input Count Memory (ICM) Register. After receipt of a $\emptyset_1$ pulse the software directs various comparison routines to check for flag conditions, which is identified in the drawing as a box 18 representing status determining means. This operates to generate a flag signal, identified IRIM, when the contents of the ICR register 12 reach the same value as ICM register 13. In addition two other flags are set, one upon the occurrence of the penultimate $\emptyset_1$ pulse before the IRIM flag condition (ICR=ICM) occurs and the other upon the occurrence of the ante-penultimate $\emptyset_1$ pulse before the IRIM flag. These are identified as ICM1 and ICM2 respectively and are produced by a decoder 37. The flag outputs remain set for the duration of the clock cycle time.

After the flag IRIM has been set the said one register ICR commences counting again from 01 with the next $\emptyset_1$ pulse. The flag signal IRIM is output to a control output of the apparatus, and to the third register 14 to represent the completion of a batch of events, the batch comprising a number of events determined by the number set into the ICM register 13. The third register 14 is thus termed the Batch Count Register (BCR). The fourth register 15 is arranged to act as a memory in a manner similar to the input count memory 13 and is termed the Batch Count Memory (BCM). When a number of batches equal to the number stored in BCM has occurred status-determining means 19 causes a flag BRBM to be set, indicating that the selected number of batches has been completed. BCR starts counting up again from the occurrence of the next IRIM flag.

The fifth register 16 is arranged to receive and count the same input pulses $\emptyset_1$ as are fed to the ICR register 12 but unlike the ICR register 12 it is not periodically reset to zero and thus its contents represent the total number of events counted by the apparatus since the commencement of operation. This is therefore identified as the Item Accumulation Register (IAR). In a similar manner the sixth register 17 is fed with the BRBM flag signals and provides a cumulative count of the total number of batches counted since it was last cleared. This register is identified as a Batch Accumulator Register (BAR).

The four inputs to the A side of the input multiplexer 25 are identified $A_1$ - $A_4$ and the input status word determined by the A inputs for the first mode of operation described above is:-

$$\frac{A_4 \quad A_3 \quad A_2 \quad A_1}{* \quad * \quad \emptyset_1 \quad *}$$

where * represents the so-called "Don't Care" condition indicating that whatever the value of these inputs the system will still operate in the required mode.

The four inputs to the B side of the input multiplexer 25 are identified $B_1$ to $B_4$ as shown in Figure 1 and the input status word determined by the B inputs for the first mode of operation described above is:-

- 12 -

$$B_4 \quad B_3 \quad B_2 \quad B_1$$

$$1 \quad 0 \quad 0 \quad {}^0/_1$$

$B_1$ determines whether four digit mode or six digit mode is selected and can therefore be selected at either 0 or 1 as indicated.

The status words for setting the apparatus to operate in the second or "count-down and batching" mode are:-

| $A_4$ | $A_3$ | $A_2$ | $A_1$ | | $B_4$ | $B_3$ | $B_2$ | $B_1$ |
|---|---|---|---|---|---|---|---|---|
| * | * | $\emptyset_1$ | * | | 1 | 1 | 0 | ${}^0/_1$ |

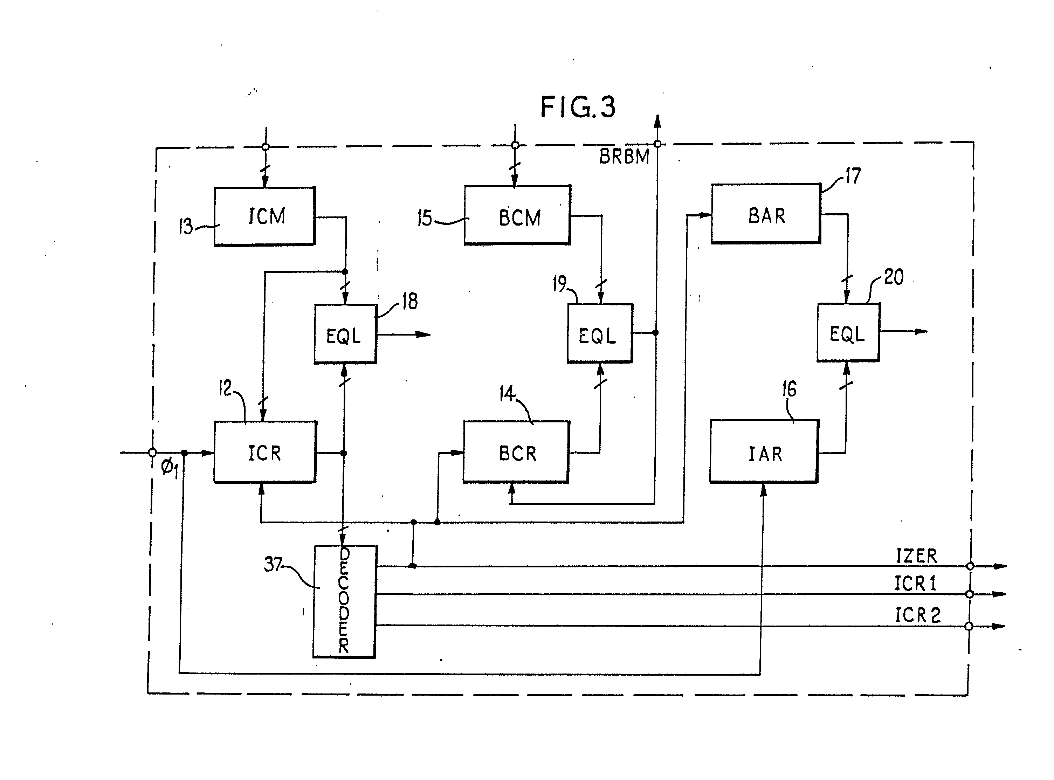

In this mode, which is illustrated in Figure 3, the count directions are determined by software to be DOWN for register 12, which operates again as ICR, and UP for the third register 14, the fifth register 16 and the sixth register 17. The second register 13 again operates as ICM, but in this mode, since the ICR register 12 counts down the software acts to transfer the contents of ICM Register 13 into ICR register 12 upon the arrival of the first $\emptyset_1$ pulse, this register also be decremented by 1. Subsequent $\emptyset_1$ pulses cause continued decrementing of ICR and after the arrival of each $\emptyset_1$ pulse the software performs comparison routines to check for flag conditions. The flag condition of ICR is ICR = 0 whereupon a flag signal IZER is set, this signal being passed to a control output from the apparatus to perform any required control function consequent on the counting of the required batch represented by the number loaded into ICM register 13. Depression of the "display" key D with identification of ICR will thus display the number of events still to occur before completion of the current batch. As with the first mode of operation the IZER flag indicating completion of a batch is preceded by flags on the preceding two $\phi_1$ pulses, that is ICM2 when ICR = $|2|$ and ICM1 when ICR = $|1|$. Flag outputs generated upon the occurrence of a $\phi_1$ pulse last for the duration of the prevailing clock cycle time.

The remaining four registers function in a manner analogous to their operation in the first mode, that is the third register 14 acts as BCR and the fourth register 15 as BCM to provide between them cycle counting of a number of batches determined by the contents loaded into BCM, the BRBM flag being set upon equality and BCR reset to zero. Likewise the fifth and sixth registers 16 and 17 provide IAR and BAR functions respectively as in the first mode.

A third or "timing and count-up" mode of operation of the apparatus is selected by manipulating the keyboard to feed to the input multiplexer two input status words as follows:-

| $A_4$ | $A_3$ | $A_2$ | $A_1$ | | $B_4$ | $B_3$ | $B_2$ | $B_1$ |
|---|---|---|---|---|---|---|---|---|
| * | $\phi_2$ | $\phi_1$ | * | | 1 | 0 | 1 | $^0/_1$ |

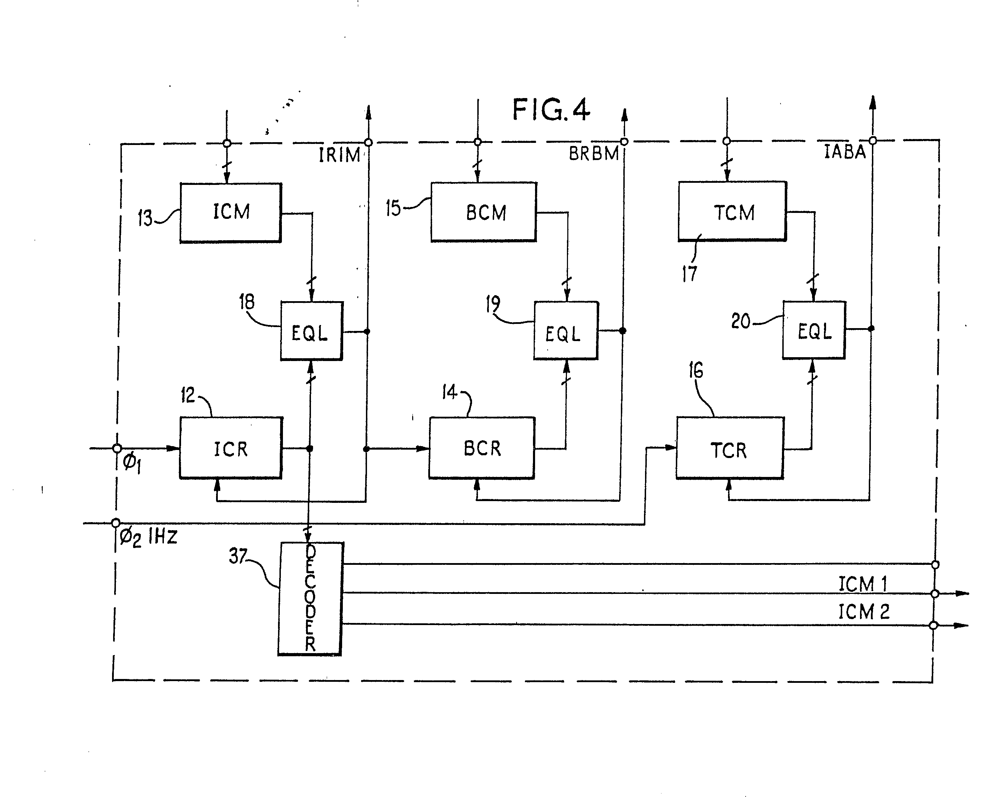

where $\phi_2$ is the clock input generated by the oscillator 29 or fed from an external source to the terminal 30. In this mode of operation, as is illustrated in Figure 4, the first four registers 12 - 15 operate in exactly the same way as in the first mode described above providing the functions ICR, ICM, BCR and BCM, and the software performs the same algorithms to produce the flags ICM2, ICM1, IRIM and BRBM in exactly the same way as for the first mode of operation. The fifth and sixth registers 16 and 17, however, provide a timing function to produce an output flag signal at a preselectable time after the commencement of counting. For this the sixth register is arranged to be loaded from the keyboard with contents representing the elapsed time after which an output is required. This is termed the Time Count Memory·function (TCM). The fifth register is arranged to be software incremented by $\emptyset_2$ clock pulses. In the embodiment illustrated $\emptyset_2$ pulses generated internally by the oscillator 29 occur at a frequency of $1H_z$, although different frequencies could be supplied in other embodiments and, of course, an external clock pulse of a faster or slower frequency could be applied to the $\emptyset_2$ input terminal if required. Register 16 thus fulfils a Time Count Register function (TCR). Software comparison takes place after each $\emptyset_2$ clock pulse in an analogous manner as for ICR and BCR registers and a flag IABA is set for, typically, one second, when the contents of TCR = TCM. After the flag has been set TCR recommences to count $\emptyset_2$ pulses.

A fourth or "timing and count-down" mode of operation can be achieved by setting in the following status words:-

| $A_4$ | $A_3$ | $A_2$ | $A_1$ | | $B_4$ | $B_3$ | $B_2$ | $B_1$ |
|-------|-------|-------|-------|---|-------|-------|-------|-------|
| * | $\emptyset_2$ | $\emptyset_1$ | * | | 1 | 1 | 1 | $0/1$ |

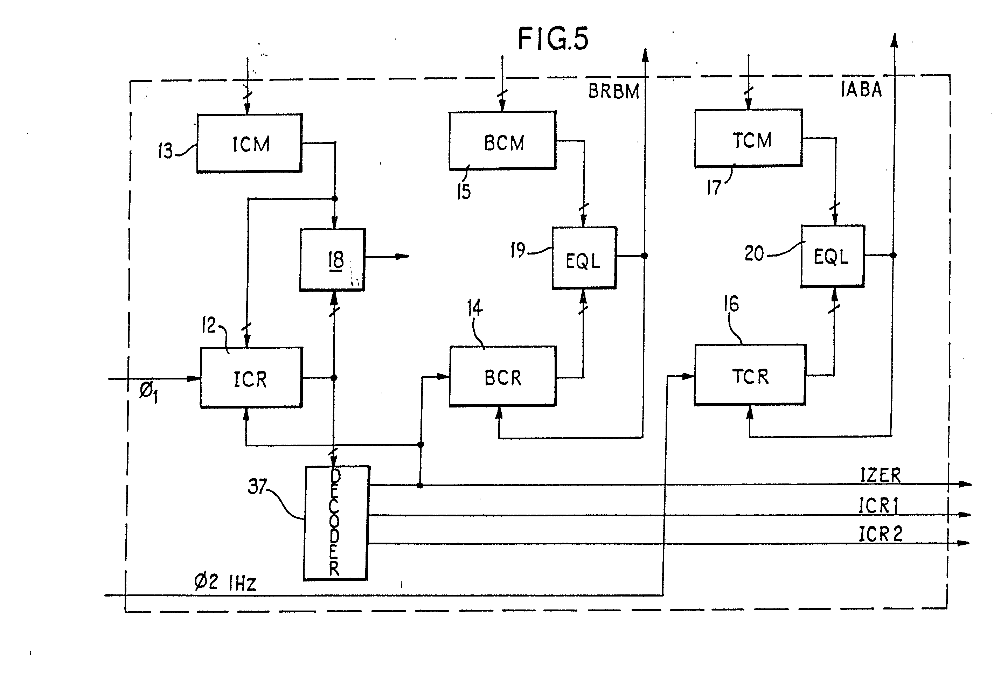

This is a combinational mode in which registers 12 - 15 function in the same way as described above in relation to the second mode of operation and the registers 16 and 17 function in the same way as described above in relation to the third mode of operation. This is shown in Figure 5.

The first four modes of operation are all "batch counting" modes in which the events generating the $\emptyset_1$ input signals are separated by flags into "batches" of a selectable size and the batches are counted and separated into groups by the flags. The nature of the events causing the $\emptyset_1$ input signals depends entirely on the use to which the apparatus is put and may be anything in response to which an electrical signal can be generated; these signals may, for example, be generated by transducers or sensors responsive to a physical event such as the passing of an object or component part in a manufacturing process, or may be generated by switches, or may even be clock pulses, in which latter case the apparatus fulfils solely a timing function or a plurality of timing functions. The events causing the $\emptyset_1$ input pulses may be regularly or irregularly occurring without affecting the manner in which the apparatus operates. To obtain the fifth mode of operation the required input status words are:-

| $A_4$ | $A_3$ | $A_2$ | $A_1$ | | $B_4$ | $B_3$ | $B_2$ | $B_1$ |
|---|---|---|---|---|---|---|---|---|
| * | $\emptyset_2$ | $\emptyset_1$ | $0/1$ | | 0 | 0 | 1 | $0/1$ |

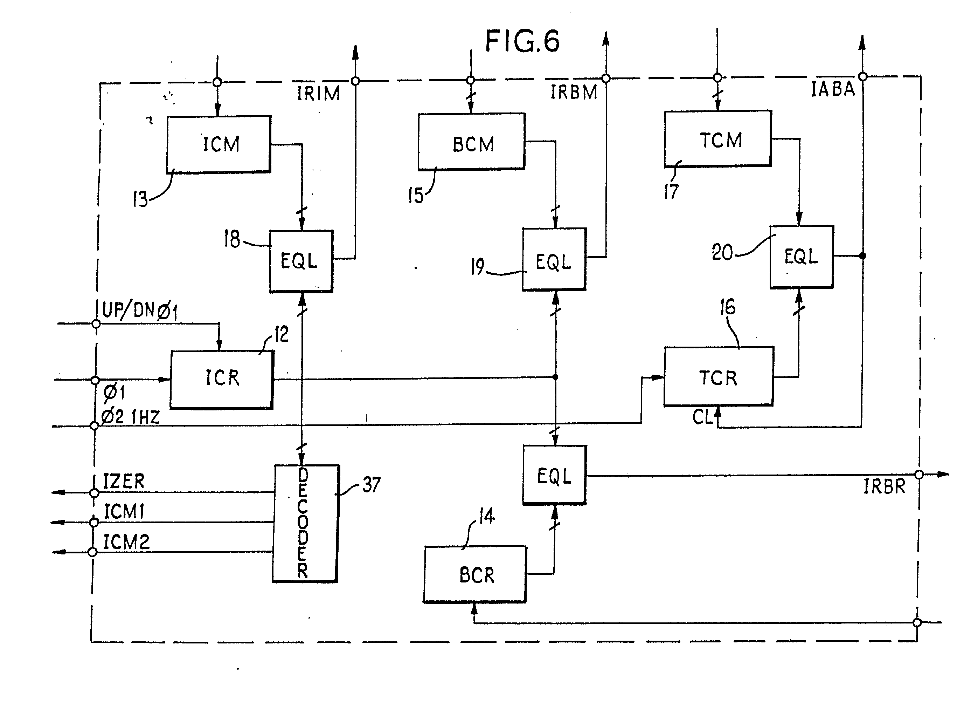

In this mode of operation, as illustrated in Figure 6, the timing functions provided by registers 16 and 17 in the third and fourth modes of operation described above are again adopted, register 16 providing the TCR function and register 17 providing the TCM function. Register 12 again performs the ICR function, but with the addition of an external UP/DOWN control which can change during counting, and registers 13, 14 and 15 all serve as memory registers holding numbers representing selected points in the counting chain; the software performs comparisons to provide not only the flags ICM2, ICM1, IRIM and IZER which have been discussed above but also flags IRBR and IRBM when the contents of ICR are equal to the contents of registers 14 and 15 respectively. In this mode of operation setting of a flag is not accompanied or followed by clearing of ICR register 12 since it must continue counting to a higher number (or a lower one, depending on the setting of the external UP/DOWN control). This then is not a "batch" mode of operation but what may be termed a "multiple trigger" mode since the flag outputs are generated at a plurality of predetermined points. The contents of registers 13, 14, 15 need not be different. If they are the same the three associated flags will just be set simultaneously. There may be situations where this is advantageous. If the input status words are set to :-

| $A_4$ | $A_3$ | $A_2$ | $A_1$ | | $B_4$ | $B_3$ | $B_2$ | $B_1$ |
|---|---|---|---|---|---|---|---|---|
| $0/1$ | $\emptyset_2$ | $\emptyset_1$ | $0/1$ | | $0$ | $0$ | $0$ | $0/1$ |

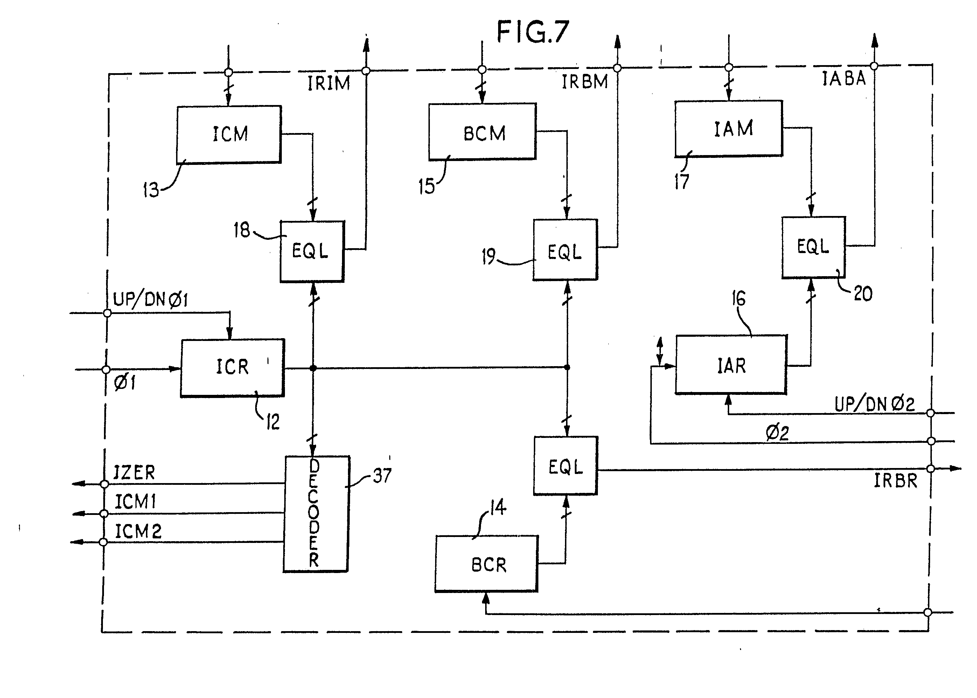

the system operates in a sixth mode in which the first four registers, that is registers 12, 13, 14 and 15 perform the same functions as in the fifth mode, but the registers 16 and 17 perform differently. Here as shown in Figure 7, register 16 performs the IAR function, being initially set to zero (or any other preselected value) and being incremented or decremented by the $\emptyset_2$ clock pulses in dependence on an UP/DOWN control 27. Register 17, on the other hand serves the IAM function, being preset with the value of a preselected number represented by a chosen point in the counting chain. Software comparisons are conducted as before upon the occurrence of each $\emptyset_2$ pulse and a flag IABA set when IAR = IAM. Again IAR recommences counting after the flag has been set.

Other modes of operation are possible. For example, although not illustrated, the system may be set to perform two individual timing operations using two independent pairs of registers. In this "timing" mode the internally generated $\emptyset_2$ clock pulses (typically 1 $H_z$) are used to clock both counters selectively _via_ hardware logic. For this mode the input status words are:-

| $A_4$ | $A_3$ | $A_2$ | $A_1$ |
|---|---|---|---|
| * | $\emptyset_2$ | $\emptyset_2$ | * |

| $B_4$ | $B_3$ | $B_2$ | $B_1$ |
|---|---|---|---|
| 0 | 1 | 1 | $^0/_1$ |

Registers 16 and 17 perform as TCR and TCM exactly as in the third mode of operation described above and flag output IABA is generated in exactly the same way. However register 12 now operates with time arithmetic in the same way as TCR, is initially set to zero, and

software incremented by $\emptyset_2$ pulses. This mode of operation is different from all the others so far described in that register 12 is not fed with $\emptyset_1$ pulses and the apparatus thus acts purely as a timing device. Register 13 is preset with a value representing the elapsed time after which an output is required and thus the IRIM flag which is set when the contents of register 12 are equal to those of register 13 represents the end of this elapsed time period. Register 12 is then reset to zero. In this mode of operation the memory registers 14 and 15 are not operative and no flags are set other than the two mentioned above (IABA and IRIM); moreover the $\emptyset_1$ input is driven by $\emptyset_2$ clock pulses. The $\emptyset_2$ clock pulses may or may not appear at the inputs to the registers 12 and 16 simultaneously, depending on external hardware logic condition. This external hardware selectably determines three different timer functions, that is asynchronous timing in which the two pairs of timing registers perform independent, mutually asynchronous timing functions, mutually synchronous timing functions, or serial functions in which the termination of one timing period triggers the commencement of the other.

CLAIMS

1. Electronic counting and control apparatus for counting input pulses occurring regularly or irregularly on one or more inputs and for producing output signals in response thereto in a predetermined manner, said apparatus comprising a keyboard having a plurality of data keys, a microprocessor having a random access memory at least a part of which is organised as a plurality of independent memory registers for counting said input pulses and memorising predetermined reference count values selected by operation of said data keys, and a display device for displaying the contents of said memory registers, characterised in that the apparatus is selectively settable to operate in any one of a plurality of different modes in each of which the apparatus is arranged to effect a different counting and control function for which purpose the said memory registers (12 to 17) are appropriately organised to operate as counters or as memories, in each said mode at least one said memory register (12) being arranged to receive and count input pulses and one or more said memory registers (13, 15, 17) being arranged to store reference count values upon the counting of which the microprocessor (11) is set to produce a flag signal to the display device (40) and/or to an output of the apparatus, selection of the desired operating mode being effected by mode-selection means (31 to 34) of the apparatus.

2.   Electronic counting and control apparatus as claimed in Claim 1, characterised in that said mode-selection means comprises a plurality of function keys (31 to 34) forming part of said keyboard.

3.   Electronic counting and control apparatus as claimed in Claim 1 or Claim 2, characterised in that the random access memory includes six said independent memory registers (12 to 17).

4.   Electronic counting and control apparatus according to any one of the preceding claims, characterised in that in a "count-up and batching" mode of operation of the apparatus, the said one memory register (12) is arranged to receive and count input pulses representing events to be counted, a second said memory register (13) is arranged to store a said reference value setting the number of said events constituting a batch of events, a third said memory register (14) is arranged to count the number of batches constituted by the events counted by the said one memory register (12), and a fourth said memory register (15) is arranged to store a further said reference value setting the number of batches constituting a set of batches, the microprocessor (11) being arranged in this mode to functionally provide first and second status-determining means (18, 19), said first status-determining means (18) being operative to detect equality between the contents of said one register (12) and those of the said second register (13) and to thereupon generate a flag signal serving to clear the said third register (14), and the second status-determining means (19) being operative to detect equality between the contents of the third and fourth registers (14, 15) and to thereupon generate a flag signal.

5. Electronic counting and control apparatus according to Claim 4, characterised in that in the said "count-up and batching" mode, a fifth said memory register (16) is arranged to receive the same input pulses as the said one register (12) whereby to effect a cumulative count of all said events which said input pulses represent, a sixth said memory register (17) being arranged to receive the flag signals generated by said first status determining means (18) whereby to count the total number of batches.

6. Electronic counting and control apparatus as claimed in any one of Claims 1 to 3, characterised in that in a "count-down and batching" mode of operation of the apparatus, the said one memory register (12) is arranged to decrement upon the occurrence of each input pulse, a second said memory register (13) is arranged to store a said reference value setting the number of input pulses constituting a batch, a third said memory register (14) is arranged to count the number of batches constituted by the input pulses counted by the said one memory (12), and a fourth memory register (15) is arranged to store a further reference value setting the number of batches constituting a set, the microprocessor (11) being arranged in this mode to functionally provide first and second status determining means (18, 19), said first status-determining means (18) being operative to detect the contents of said one register (12) becoming equal to zero to thereupon generate a flag signal for incrementing the said third register (14) and causing the non-destructive read out of the contents of said second register (13) into the said one register (12), and the said second status-determining means (19) being operative to detect equality between the contents of said third and fourth registers (14, 15) and to thereupon generate a flag signal serving to clear the said third register (14).

7. Electronic counting and control apparatus as claimed in Claim 6, characterised in that in the "count-down and batching" mode of operation a fifth said memory register (16) is arranged to receive the said input pulses to effect a cumulative count of all said pulses, and a sixth said memory register (17) is arranged to receive the flag signal output from the first status-determining means (18) whereby to count the total number of batches.

8. Electronic counting and control apparatus as claimed in any of claims 1 to 3, characterised in that the apparatus is arranged to operate in a combined "timing and count-up" mode in which the said one memory register (12) and second, third and fourth said memory registers (13, 14,15) are arranged to operate in the manner set forth in Claim 4 for the "count-up and batching" mode of operation with the microprocessor (11) providing the said first and second status-determining means (18, 19),a fifth said memory register (16) being arranged to count timing pulses from an internal or an external clock pulse source (29) while a sixth memory register (17) is arranged to store a reference value representing a selected number of clock pulses corresponding to a timing interval to be timed, the microprocessor (11) functionally providing a third status-determining means (20) operative to output a flag signal when the contents of the fifth memory register (16) are equal to the value stored in the sixth memory register (17), the fifth memory register (16) then being cleared to commence counting the next timing interval.

9. Electronic counting and control apparatus as claimed in any one of Claims 1 to 3, characterised in that the apparatus is arranged to operate in a combined "timing and count-down" mode in which the said one memory register (12) and second, third and fourth said memory registers (13, 14, 15) are arranged to operate in the manner set forth in Claim 6 for the said "count-down and batching" mode of operation with the microprocessor (11) providing the said first and second status-determining means (18,19),

a fifth said memory register (16) being arranged to count timing pulses from an internal or an external clock pulse source (29) while a sixth memory register (17) is arranged to store a reference value representing a selected number of clock pulses corresponding to a timing interval to be timed, the microprocessor (11) functionally providing a third status-determining means (20) operative to output a flag signal when the contents of the fifth memory register (16) are equal to the value stored in the sixth memory register (17), the fifth memory register (16) then being cleared to commence counting the next timing interval.

10. Electronic counting and control apparatus as claimed in any of Claims 1 to 3, characterised in that the apparatus is arranged to operate in a "multiple-trigger counting" mode in which the said one memory register (12) is arranged to receive input pulses representing the events being counted, and second, third and fourth said memory registers (13, 14, 15) are arranged to store respective, but not necessarily different, values entered by means of the data key (35) of the keyboard, the microprocessor (11) being arranged to functionally provide first, second and third status-determining means (18, 19) operative to generate respective first, second and third flag signals when the contents of the said one memory register (12) are equal to the contents of the second, third or fourth memory register respectively (13, 14, 15).

11. Electronic counting and control apparatus as claimed in Claim 10, characterised by the provision of means for selectively controlling  whether the said one memory register increments or decrements upon receipt of the said input pulses.

12. Electronic counting and control apparatus as claimed in Claim 10 or Claim 11, characterised in that in the said "multiple-trigger" mode of operation, a said fifth said memory register (16) is arranged to receive a timing pulse train and a sixth said memory register (17) is arranged to store a value, entered therein via the keyboard (35), representing a time interval from commencement of counting when an output signal is required, the microprocessor (11) functionally providing status-determining means (20) operable to generate a flag signal when equality between the contents of the fifth and sixth memory registers (16, 17) is detected, generation of said flag signal by the further status-determining means (20) causing the said fifth memory register (16) to be reset to zero.

13. Electronic counting and control apparatus as claimed in any one of Claims 1 to 3, characterised in that the apparatus is arranged to operate in a "timing" mode in which the said one memory register (12) is arranged to receive timing pulse signals, a second said memory register (13) is arranged to store a said reference value representing a selected elapsed time after the commencement of counting at which an output signal is required, and two further said memory registers (16, 17) are arranged to operate in a manner corresponding to that of the said one and said second registers (12, 13) respectively in this mode.

14. Electronic counting and control apparatus as claimed in Claim 13, characterised in that one said further memory register (16) is arranged to receive timing pulses from a different source from that which feeds the said one memory register (12).

15. Electronic counting and control apparatus as claimed in Claim 13, characterised in that one said further memory register (16) is arranged to receive timing pulses from the same source as the said one memory register (12) and commencement of counting by the said one further memory (16) register is controlled by the occurrence of a flag signal representing equality between the contents of the said one and the second memory registers (12, 13).

16. Electronic counting and control apparatus according to Claim 1, characterised in that the apparatus is arranged to operate in two or more of the following modes:

    a) the "count-up and batching" mode as claimed in Claim 4 or Claim 5;

b) the "count-down and batching" mode as claimed in Claim 6 or Claim 7.

c) the "timing and count-up mode" as claimed in Claim 8;

d) the "timing and count-down mode" as claimed in Claim 9;

e) the "multiple-trigger" mode as claimed in any one of Claims 10 to 12; and

f) the "timing" mode as claimed in any one of Claims 13 to 15.

17. Electronic counting and control apparatus as claimed in Claim 1, characterised in that there are further provided means (37) for generating respective flag signals when the contents of the said one register (12) differ by two and by one from those of a second said register (13) set to hold a reference value.

18. Electronic counting and control apparatus as claimed in any one of the preceding Claims, characterised in that the said microprocessor (11) is arranged to receive input signals via a multiplexer (25) having two sets of inputs ($A_1$-$A_4$; $B_1$-$B_4$), one set ($A_1$-$A_4$) being arranged to receive, via respective bistable circuits, (21 to 24), pulses for counting and control signals for controlling the direction of counting, and the other set ($B_1$-$B_4$) being arranged to receive signals from keys or control lines (31 to 34) for determining the mode of operation of the apparatus.

FIG.1

FIG.2

FIG.3

# FIG.4

0021659

FIG.5

FIG.6

FIG.7

7/7

0021659

## DOCUMENTS CONSIDERED TO BE RELEVANT

| Category | Citation of document with indication, where appropriate, of relevant passages | Relevant to claim |
|---|---|---|
| | INSTRUMENTS AND CONTROL SYSTEMS, vol. 51, no. 10, October 1978, Radnor PA, US "Predetermining counter uses microprocessor", page 92. <br><br> * Page 92, from left-hand column, first line to right-hand column, line 6 * <br><br> -- | 1 |
| | ELECTRONIQUE ET APPLICATIONS INDUSTRIELLES, no. 244, November 15, 1977, Paris, FR BONINI: "Réalisation d'un compteur programmable", pages 25-27. <br><br> * Figures 1,2; pages 25-27 * <br><br> -- | 1 |
| | ADVANCES IN INSTRUMENTATION, vol. 31, no 1, 1976, Pittsburgh, US STRUGER et al. "A multiprocessor based programmable controller", pages 1-6. <br><br> * Figures 3,4,6,7; table 1; from page 1, right-hand column, line 17 to page 3, left-hand column, line 39 * <br><br> -- | 1 |
| A | FR - A - 1 482 533 (LABEN) <br><br> * Figure 1; from page 2, left-hand column, line 16 to page 3, left-hand column, line 20 * <br><br> -- | 1 |
| A | US - A - 4 028 532 (REUTMER) <br><br> * Figures 2,3; from column 6, line 19 to column 8, line 11 * | 1 |

./.

**CLASSIFICATION OF THE APPLICATION (Int. Cl. 3)**

G 06 F 15/46
H 03 K 21/36

**TECHNICAL FIELDS SEARCHED (Int.Cl. 3)**

G 06 F 15/46
        15/48
        15/36
H 03 K 21/36

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-08-1980 | FEUER |

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | CONTROL ENGINEERING, vol. 17, no. 8, August 1970, New York, US VAGGE: "Core memory controls production line", pages 46-49. <br><br> * Figure 2; page 48, from left-hand column, line 20 to right-hand column, line 21 * <br><br> ---- | 1 | |
| | | | TECHNICAL FIELDS SEARCHED (Int. Cl. 3) |

EPO Form 1503.2  06.78